# FASCICULE DE BREVET EUROPEEN

(11) **EP 2 353 374 B1**
(45) Date de publication et mention de la délivrance du brevet: **21.11.2018**
(21) Numéro de dépôt: 11305091.8
(22) Date de dépôt: 28.01.2011
(51) Int. Cl.: A01J 5/04, A01J 9/04

(54) **Installation de transfert de lait depuis une machine à traire jusqu' à une cuve de stockage, équipée d'au moins un échangeur thermique**
Anlage für den Transport von Milch von einer Melkmaschine zu einem Lagerbehälter, die mit mindestens einem Wärmetauscher ausgestattet ist
Facility for transferring milk from a milking machine to a storage tank, provided with at least one heat exchanger

(30) Priorité: 29.01.2010 FR 1000357
(43) Date de publication de la demande: 10.08.2011
(73) Titulaire: Ets J.&Y. Charriau, 44270 St Etienne de Mer Morte (FR)
(72) Inventeur: Charriau, Jacques, 85300, CHALLANS (FR); Charriau Yves, 44310, SAINT-PHILBERT DE GRAND LIEU (FR)
(74) Mandataire: Jacobacci Coralis Harle

(56) Documents cités:
- WO-A1-2007/049974
- FR-A1- 2 920 268
- US-A- 5 272 997

## Description

La présente invention concerne les installations de transfert de lait depuis une machine à traire jusqu'à une cuve de stockage, et en particulier les installations comprenant un réservoir de récolte du lait associé à une pompe de transfert, suivi d'un système de canalisation(s) équipé d'au moins un échangeur thermique assurant le refroidissement ou au moins le pré-refroidissement du lait transféré.

Au sein des exploitations laitières, les installations pour la collecte de lait comprennent habituellement les principaux dispositifs suivants, de l'amont vers l'aval selon le sens de cheminement du lait :
- une machine à traire, avec sa pompe à vide et ses canalisations,
- une installation pour le transfert du lait, composée d'un réservoir de récolte du lait (encore appelé chambre à lait) associé à sa pompe de transfert, suivi d'un système de canalisation(s), et
- une cuve ou tank, servant au stockage du lait en attendant sa récupération par exemple par un industriel laitier.

La pompe de transfert assure le cheminement du lait le long et au sein du système de canalisation(s), jusqu'à la cuve de stockage ; elle est pour cela pilotée en discontinu, pendant la traite, à partir des informations fournies par un capteur de niveau de lait disposé dans le réservoir de récolte associé.
Cette pompe sert souvent également à l'injection d'eau sous pression dans le système de canalisation(s), pour son nettoyage ; elle fonctionne dans ce cas en continu.

Pour assurer correctement ces deux fonctions, et en particulier celle de nettoyage, la pompe de transfert a généralement un débit élevé (par exemple de l'ordre de 200 L/min ou de 12m³/h).

Du fait de ce fort débit, pendant la traite, cette pompe de transfert fonctionne peu de temps (quelques minutes) et selon des cycles successifs courts (souvent de quelques secondes) ; à titre de comparaison, la durée totale de la traite est souvent beaucoup plus longue, c'est-à-dire généralement de l'ordre de 1 heure.
Pour le transfert du lait, la pompe de transfert fonctionne donc par intermittence, en expulsant des volumes identiques de lait, ou au moins approximativement identiques, à une cadence qui est fonction du déroulement de la traite (notamment du débit de lait).

Par ailleurs, dans une telle installation de récolte, la préservation des qualités organoleptiques et physico-chimiques du lait exige, notamment, son refroidissement rapide après récolte.
Cette opération de refroidissement précoce évite la destruction des graisses alimentaires (par des phénomènes d'oxydation ou de lipolyse) et freine la prolifération des germes.

Pour cela, le lait récolté est traditionnellement refroidi au sein de la cuve de stockage qui est réfrigérée.

En complément de cette réfrigération finale, le système de canalisation(s) de l'installation de transfert peut comporter un échangeur thermique assurant le refroidissement (ou au moins le pré-refroidissement) du lait au cours de son transfert, avant même d'atteindre la cuve de stockage.
Ce refroidissement ou pré-refroidissement permet de supprimer, ou au moins de réduire, les chocs thermiques subis par le lait déjà stocké dans la cuve réfrigérée, qui surviennent habituellement à chaque apport, dans la cuve de stockage, de lait « neuf » venant d'être récolté.

Les échangeurs thermiques communément employés à cet effet, peuvent être classés selon deux grandes catégories :
- les échangeurs dits « à plaques », considérés habituellement performants sur le plan du refroidissement mais difficiles à nettoyer, qui comprennent une série de plaques en acier inoxydable réfrigérantes au niveau desquelles circulent le lait à refroidir et le liquide de refroidissement ; et
- les échangeurs dits « tubulaires » qui, à l'inverse des échangeurs à plaques, sont faciles à nettoyer mais présentent des performances de refroidissement aléatoires, et consistent en un tube pour la circulation du lait inclus dans un tube périphérique dans lequel chemine, à contre-courant, un liquide ou fluide de refroidissement.

Cependant, dans la plupart des échangeurs thermiques connus à ce jour, l'efficacité du refroidissement ou du pré-refroidissement sur le lait, avant son écoulement dans la cuve de stockage, est relativement limitée.

Cet inconvénient s'explique principalement par le fait que, entre deux cycles de la pompe de transfert, le lait reste stationnaire dans le système de canalisation(s), et par conséquent dans l'échangeur thermique.

Les échanges thermiques entre le lait et le fluide réfrigérant s'effectuent alors par conduction, ce qui aboutit à la création d'un phénomène de stratification thermique, puis à l'augmentation instantanée de la résistance thermique, alors que la conductivité thermique chute significativement, nuisant au refroidissement du lait et aboutissant à la quasi-nullité des échanges.

Par conséquent, en pratique, de tels échangeurs dits « statiques » ou « stationnaires » ne donnent actuellement satisfaction que lorsque le réseau d'eau de refroidissement est performant. Dans ce cas, la quantité d'eau utilisée pour refroidir le lait en cours de transfert, est cependant relativement importante.

Un tel échangeur thermique « stationnaire » est par exemple décrit dans le document WO-2007/049974.

Une première approche de la demanderesse pour remédier à cet inconvénient des installations avec échangeurs thermiques « stationnaires », a été de proposer une installation de transfert dite « dynamique » telle que décrite dans le document FR-2 920 268.

Une telle installation comprend pour cela un système de canalisation(s) muni d'un échangeur thermique associé à des moyens qui permettent une circulation en boucle d'au moins une partie du lait au travers dudit échangeur, cela en amont de la cuve de stockage.
Ce recyclage du lait en cours de transfert permet son passage à plusieurs reprises au sein de l'échangeur thermique, et augmente ainsi son temps de circulation ou de passage dans cet échangeur. On obtient un échange thermique efficace entre le lait en cours de transfert et le liquide de refroidissement, ceci pendant toute la durée de la traite si nécessaire et avant son écoulement final dans la cuve de stockage.
De plus, le refroidissement du lait au niveau de l'échangeur thermique s'obtient avec une consommation énergétique moindre par rapport à celle nécessaire au niveau du tank à lait, améliorant ainsi le bilan énergétique de l'installation.
En outre, la mise en circulation du lait permet de supprimer le phénomène de stratification thermique, et d'assurer un transfert thermique par convection.

Cependant, du fait des équipements supplémentaires intervenant dans le recyclage du lait, une telle installation de transfert avec échangeur thermique dit « dynamique » entraine des coûts supplémentaires de fabrication.

Il existe par conséquent un besoin pour une installation de transfert de lait avec échangeur thermique tubulaire du type « stationnaire », dont la structure optimise l'action de l'échange thermique sur le lait au cours de son transfert, également entre deux cycles de fonctionnement de la pompe de transfert et par conséquent avant son écoulement dans la cuve de stockage.
L'efficacité de l'échangeur thermique mis en oeuvre doit en plus avantageusement pouvoir être moins dépendante des performances du réseau d'eau de refroidissement.

Dans ce cadre, la demanderesse a mis en évidence que la section de l'espace réfrigérant équipant les échangeurs thermiques tubulaire « stationnaires » actuels, dans lequel circule le fluide réfrigérant, est trop importante par rapport aux performances hydrauliques des réseaux d'adduction d'eau existant dans les installations laitières.
De plus, elle a également observé que cette section excessive aboutit à une chute de la pression du fluide réfrigérant à l'entrée de l'échangeur, entraînant alors une diminution de sa vitesse de circulation. On aboutit alors à une diminution significative des échanges thermiques.

Sur cette base, la demanderesse a développé une nouvelle installation de transfert du genre « stationnaire », simple et peu onéreuse, dont l'échangeur thermique tubulaire est parfaitement adapté pour optimiser l'échange avec un débit de fluide réfrigérant minimum.
Cette installation a en plus l'avantage de pouvoir s'adapter efficacement aux réseaux d'adduction d'eau des exploitations laitières, et d'employer une quantité optimale de fluide réfrigérant.

L'installation de transfert de lait selon l'invention (voir la revendication 1) est du type comprenant un réservoir de récolte du lait raccordé à une cuve de stockage par un système de canalisation, lequel réservoir de récolte est équipé d'une pompe assurant le transfert du lait, par cycles successifs et espacés, par l'intermédiaire dudit système de canalisation depuis ledit réservoir de récolte jusqu'à ladite cuve de stockage, lequel système de canalisation est équipé d'au moins un échangeur thermique tubulaire assurant le refroidissement ou au moins le pré-refroidissement du lait demeurant statique au sein dudit échangeur thermique entre deux desdits cycles de transfert, lequel échangeur thermique comprend au moins un module comportant un tube central qui est logé de manière concentrique au sein d'un tube périphérique, lequel tube central et lequel tube périphérique sont chacun délimités par une surface annulaire intérieure et par une surface annulaire extérieure, laquelle surface intérieure du tube central définit un espace central pour la circulation du lait, constitutif dudit système de canalisation, et laquelle surface extérieure du tube central et laquelle surface intérieure du tube périphérique définissent ensemble un espace annulaire pour le cheminement d'une lame de fluide réfrigérant, destiné à cheminer à contrecourant par rapport au sens de cheminement du lait.
Conformément à l'invention, l'épaisseur radiale dudit espace annulaire est inférieure ou égale à 2,8 mm, de préférence comprise entre 1 et 2,3 mm, et de préférence encore de l'ordre de 1,5 mm ; de plus, le ratio correspondant à la capacité volumique de l'espace annulaire sur la capacité volumique de l'espace central est inférieur ou égal à une valeur de 0,45, et de préférence encore compris entre 0,3 et 0,4.

En pratique, il s'avère qu'une telle structure d'installation de transfert permet d'extraire efficacement les calories contenues dans le lait transféré, tout en limitant le volume de liquide réfrigérant consommé.

Cette installation a en plus l'intérêt de rester efficace pour les exploitations dont le réseau d'eau est peu performant, c'est-à-dire dont la pression est inférieure à 2 bars ou le débit est inférieur à 0,4 Us.

Des caractéristiques complémentaires avantageuses de l'invention, pouvant être prises indépendamment ou en combinaison, sont précisées ci-dessous :
- le fluide réfrigérant chemine au sein de l'espace annulaire dédié, formant une lame annulaire réfrigérante, selon une vitesse assurant un régime turbulent dudit fluide réfrigérant, permettant notamment une action autonettoyante et une évacuation rapide des calories absorbées afin de maintenir une différence de température maximale entre le lait en cours de transfert (non circulant) et le fluide réfrigérant ; pour cela, la vitesse du fluide réfrigérant est avantageusement comprise entre 0,8 m/s et 3 m/s, et de préférence encore supérieure à 1,5 m/s ;
- le diamètre de la surface extérieure du tube central est compris entre 22 et 34 mm, de préférence de l'ordre de 25 mm, et le diamètre de la surface intérieure du tube périphérique est compris entre 25 et 38 mm, de préférence de l'ordre de 28 mm ;
- le tube périphérique est muni de bosselages saillants du côté de sa surface intérieure et orientés vers le tube central associé, de sorte à assurer le centrage de ce dernier et favoriser le régime turbulent du fluide réfrigérant ;
- l'échangeur thermique comprend au moins un module du type rectiligne constitué d'au moins un tube central rectiligne pour la circulation du lait, logé de manière concentrique au sein d'un tube périphérique également rectiligne, pour le cheminement du fluide réfrigérant ; dans ce cas, le module ou l'un au moins des modules est constitué de deux tubes centraux rectilignes logés chacun dans un tube périphérique rectiligne et reliés par un coude de jonction, lesquels tubes centraux sont inclinés vers le bas, de l'amont vers l'aval, formant ainsi un V ouvert sur le côté ;
- l'échangeur thermique du type serpentin (ou autrement dit spiralé) comprend au moins un module constitué d'au moins un tube central de forme générale spiralée pour la circulation du lait, logé de manière concentrique au sein d'un tube périphérique également de forme spiralée, pour le cheminement du fluide réfrigérant ;
- l'échangeur thermique comprend plusieurs modules, disposés en parallèle et/ou en série.

L'invention sera encore illustrée, sans être aucunement limitée, par la description suivante de différentes formes de réalisation particulières, données uniquement à titre d'exemples et représentées sur les différents dessins annexés dans lesquels :
- la figure 1 est une vue schématique d'une partie d'installation laitière, comprenant une installation de transfert du lait reliant un réservoir de récolte amont et une cuve de stockage aval, équipée d'un échangeur thermique tubulaire comportant un unique module en Vé ;
- la figure 2 montre schématiquement, selon un plan de coupe longitudinal, les tubes constitutifs de l'échangeur thermique de la figure 1 ;
- la figure 3 est une vue en coupe transversale, selon un plan de coupe III-III sur la figure 2, des tubes constitutifs de l'échangeur thermique ;
- la figure 4 montre, vue par dessus et très schématiquement, une structure particulièrement intéressante d'échangeur thermique composé de trois modules échangeurs en Vé, montés en parallèle, et destinés à équiper une installation de transfert du type de la figure 1 ;
- la figure 5 est une vue schématique d'une partie d'installation laitière correspondant à une variante de la figure 1, dont l'installation de transfert du lait comprend deux modules en Vé montés en série et formant chacun un échangeur thermique ;
- la figure 6 est une vue schématique d'une partie d'installation laitière du type de la figure 5, comprenant deux modules en Vé montés en série et formant ici un unique échangeur thermique ;
- la figure 7 est une vue schématique, et en perspective, d'un échangeur thermique tubulaire du genre spiralé.

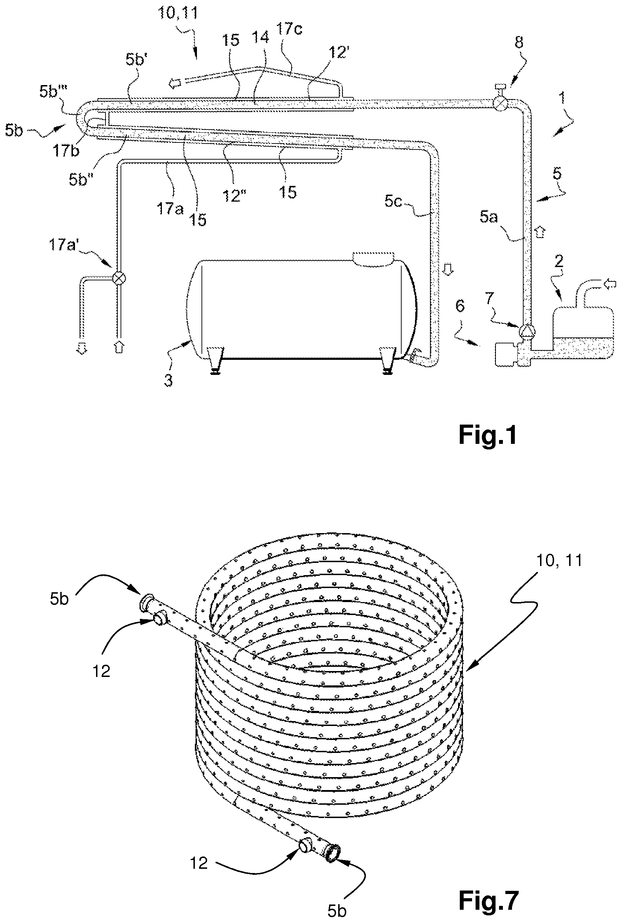

Tel que représenté sur la figure 1, l'installation de transfert 1 relie - un réservoir 2 (appelé encore « récepteur » ou « chambre à lait ») pour la récolte du lait provenant d'une machine à traire (non représentée), et - une cuve de stockage réfrigérée 3 (encore communément appelée « tank à lait »).

Cette installation de transfert 1 comporte un système de canalisations 5, adapté pour la circulation du lait, qui est associé sur sa longueur à différents dispositifs fonctionnels détaillés ci-après.

En amont, la canalisation 5 consiste en un tronçon 5a (de préférence vertical rectiligne) dit « canne à lait », connecté au réservoir 2 par le biais d'une pompe de transfert 6.

Cette pompe 6 est associée à au moins un capteur de niveau maximal (non représenté) disposé dans le réservoir de récolte 2 ; comme développé par la suite, les informations fournies par ce capteur assurent un fonctionnement de la pompe de transfert 6 par cycles successifs lors de la traite.

L'extrémité amont de cette canne à lait 5a est reliée à la pompe de transfert 6 par l'intermédiaire d'un clapet anti-retour 7. Son extrémité aval est quant à elle raccordée au reste de la canalisation 5 ; à ce niveau, on remarque la présence d'une prise d'air 8 située à un niveau le plus élevé possible, servant à la purge de ces canalisations.

Le système de canalisations 5 se poursuit par un tronçon intermédiaire 5b, constitutif d'un échangeur thermique tubulaire. Ce tronçon intermédiaire 5b peut être mis en place dans la salle de traite, au-dessus de la fosse de travail.

Comme détaillé par la suite, l'intérêt de cet échangeur thermique va être d'assurer le refroidissement (ou au moins le pré-refroidissement) du lait transféré avant son écoulement dans la cuve de stockage 3.

A la suite de l'échangeur thermique, le système de canalisations 5 se termine par un tronçon aval 5c, s'étendant jusqu'au tank à lait 3.

L'échangeur thermique, signalé par un repère général 10 sur la figure 1, est du type tubulaire.

Il comprend un ensemble de tubes qui forment ici un module échangeur unique 11 constitué par le tronçon intermédiaire de canalisations 5b, équipé sur sa longueur de tubes périphériques 12 adaptés pour la circulation, à contresens ou contrecourant, d'un fluide réfrigérant ou frigorifique (par exemple de l'eau).

Le tronçon intermédiaire 5b de ce module échangeur 11 se compose ici de deux tubes rectilignes superposés (par exemple en acier inoxydable), l'un supérieur amont 5b' et l'autre inférieur aval 5b", reliés l'un à l'autre par un coude de jonction 5b"' de forme générale demi-circulaire.

L'aspect rectiligne des tubes 5b' et 5b" facilite notamment le nettoyage et la maîtrise des phénomènes de dilatation.
De manière alternative, le tube intermédiaire 5b peut présenter une forme générale spiralée ou hélicoïdale ou en serpentin (décrit ci-après en relation avec la figure 7).

Le premier tube 5b', formant le tube aller supérieur du module échangeur 11, s'étend à partir de l'extrémité aval de la canne à lait 5a, cela jusqu'au coude de jonction 5b'".
Le second tube 5b", correspondant au tube retour inférieur, s'étend à partir du coude de jonction 5b"' et aboutit au niveau du tronçon terminal 5c.

Ces tubes aller 5b' et retour 5b" sont inclinés chacun vers le bas, de l'amont vers l'aval, selon des pentes inversées l'une par rapport à l'autre, et sont superposés dans un même plan vertical. Ils forment ensemble une sorte de Vé ouvert (ou incliné) sur le côté, dont l'axe ou le plan de symétrie est sensiblement horizontal (cet axe ou plan correspond encore à la bissectrice du module en Vé).
Cette forme particulière en Vé a pour intérêt d'optimiser la compacité de l'échangeur et sa vidange par gravité.

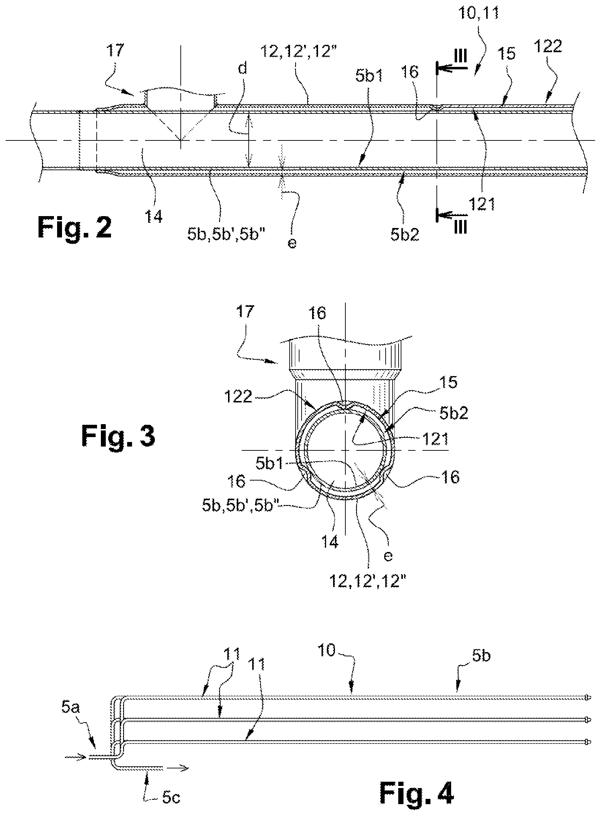

Comme illustré sur les figures 2 et 3, le tube constitutif de ce tronçon intermédiaire 5b est délimité par une surface annulaire intérieure 5b1 (dite encore « diamètre intérieur ») et par une surface annulaire extérieure 5b2 (dite encore « diamètre extérieur »).
Cette surface intérieure 5b1 du tube central 5b définit un espace ou volume central 14 pour la circulation du lait, cet espace central 14 étant constitutif du système de canalisations 5.

Pour un échange thermique optimal, la capacité volumique de l'échangeur thermique 10, et plus précisément son espace central 14, est égale, ou au moins approximativement égale, au volume de lait transféré lors d'au moins un cycle de la pompe de transfert 6, et de préférence d'au moins deux cycles de la pompe de transfert 6.
De manière générale, le volume de lait transféré par chaque cycle de la pompe de transfert 6 est notamment fonction du débit moyen de la traite.
En l'espèce, les tubes aller 5b' et retour 5b" ont avantageusement chacun une capacité volumique correspondant au volume de lait transféré lors d'un cycle de la pompe de transfert 6.

Comme représenté généralement sur la figure 1 et en détail sur les figures 2 et 3, les tubes aller 5b' et retour 5b" sont chacun logés, de manière concentrique, au sein de l'un des tubes rectilignes périphériques 12, respectivement 12' et 12".

En particulier, ces tubes périphériques 12 ne recouvrent pas le coude de jonction 5b'''.
Ces tubes périphériques 12 sont avantageusement réalisés en polychlorure de vinyle (ou PVC), pour des questions de coût, d'isolation et de perte de charge. Ils peuvent également être réalisés en acier inoxydable.

Là encore, les tubes périphériques 12 sont chacun délimités par une surface annulaire intérieure 121 (dite encore « diamètre intérieur ») et par une surface annulaire extérieure 122 (dite encore « diamètre extérieur »).

L'espace annulaire 15 ménagé autour du tube intermédiaire 5b, délimité par la surface externe 5b2 du tube intermédiaire 5b et par la surface interne 121 du tube périphérique 12 associé, est ici conformé pour permettre le cheminement d'une lame annulaire de fluide de refroidissement.

De manière générale, ce fluide de refroidissement peut être de l'eau ou tout autre fluide frigoporteur adapté.
Dans le cas de l'emploi d'eau, son cheminement est mis en oeuvre par un système de pompe à eau adapté, propre à l'exploitation, ou par la pression propre du réseau de distribution général.

Selon l'invention, l'épaisseur radiale e de cet espace annulaire 15 est inférieure ou égale à 2,8 mm, et de préférence encore comprise entre 1 mm et 2,3 mm, et de préférence encore entre 1,5 et 2 mm.
Par « épaisseur radiale e », on entend encore la distance radiale séparant la surface externe 5b2 du tube intermédiaire 5b et la surface interne 121 du tube périphérique 12 associé.

Encore selon l'invention, le ratio correspondant à la capacité volumique de l'espace annulaire 15 divisée par la capacité volumique de l'espace central 14, est inférieur ou égal à une valeur de 0,45. De préférence, ce ratio est encore compris entre 0,3 et 0,4.
Du fait de la section constante des tubes, on retrouve la valeur de ce ratio en divisant la section de l'espace annulaire 15 (en mm²) par la section de l'espace central 14 (en mm²).

En pratique, il s'avère que cette épaisseur radiale particulière de l'espace annulaire 15, combinée au ratio précité confère, à l'échangeur thermique, une efficacité particulièrement intéressante sur le plan du refroidissement du lait, avec une consommation de fluide réfrigérant réduite.

Pour une action de refroidissement optimale, le fluide réfrigérant chemine au sein de l'espace annulaire dédié 15 selon un régime turbulent.
On entend par « régime turbulent » le fait que le fluide réfrigérant chemine dans des conditions assurant un nombre de Reynolds (Re) supérieur à 4000.
Ce régime turbulent génère une action autonettoyante (limitant ainsi les dépôts de minéraux) et assure une évacuation rapide des calories absorbées afin de maintenir un différentiel de température maximal au niveau de la paroi du tube central 5b.
Il est en particulier obtenu par une vitesse du fluide réfrigérant comprise entre 0,8 m/s et 3 m/s, et de préférence encore supérieure à 1,5 m/s (comprise entre 1,5 m/s et 3 m/s) ; cette vitesse dépend habituellement des performances hydrauliques disponibles sur le site d'installation.

Des bossages 16, formant entretoises, sont ménagés régulièrement sur les tubes périphériques 12, cela de manière saillante du côté de leur surface intérieure et orientés vers le tube central associé 5b.
Ces bossages 16 sont prévus de manière à maintenir la position concentrique des tubes périphériques 12 par rapport au tube central 5b associé (figures 2 et 3). De plus, ces bosselages saillants 16 favorisent le régime turbulent du fluide réfrigérant, ce qui permet de réduire la vitesse de cheminement du fluide et par conséquent de pouvoir s'adapter à des réseaux d'eau moins performants.

De manière alternative ou complémentaire, ces bossages sont ménagés régulièrement sur les tubes centraux, cela de manière saillante du côté de leur surface extérieure et orientés vers le tube périphérique associé.

De manière alternative, toujours pour maintenir cet aspect concentrique, les entretoises peuvent également se présenter sous la forme de tiges (par exemple en acier inoxydable) soudées longitudinalement à la surface des tubes centraux 5b, ces tiges venant en appui contre la surface interne du tube périphérique 12 associé.

La circulation à contresens du fluide de refroidissement au sein des espaces périphériques 15, est obtenue par un raccordement adapté à des voies 17 d'entrée et de sortie en fluide.

En l'occurrence et tel que représenté sur la figure 1, la voie 17a d'apport en fluide de refroidissement « froid » est raccordée à l'une des extrémités du tube périphérique 12" associé au tube retour 5b", c'est-à-dire l'extrémité située du côté aval dudit second tube 5b" et à l'opposé du coude 5b'''.
Une voie de jonction 17b est prévue entre les extrémités en regard des tubes périphériques 12' et 12", du côté du coude 5b'''.
La voie de sortie 17c s'étend quant à elle à partir de l'autre extrémité du tube périphérique 12' associé au premier tube rectiligne 5b', c'est-à-dire l'extrémité opposée au coude 5b'''.

La pompe de transfert 6 et les moyens pour la régulation de la circulation du fluide réfrigérant dans l'échangeur 10 sont pilotés en fonctionnement par des moyens de commande adaptés.
Ces moyens de commande sont par exemple des moyens électroniques et/ou informatiques, notamment du genre automate programmable industriel ou circuit électrique.

Le fonctionnement de la pompe de transfert 6 et la circulation du fluide réfrigérant vont intervenir de préférence par cycles, dont la durée est contrôlée.
La durée des cycles de circulation du fluide réfrigérant, est ajustée avantageusement en fonction du taux de refroidissement recherché pour le lait (c'est-à-dire encore la température souhaitée pour le lait avant son écoulement dans la cuve de stockage).

En pratique, le lait récolté par la machine à traire, est récupéré en continu dans le réservoir 2 (dénommé encore chambre à lait).
Lorsque le lait atteint un certain niveau maximal dans ce réservoir 2 (détecté par le capteur dédié), il est mis en circulation par la pompe de transfert 6, cela au sein du système de canalisations 5, et par conséquent au sein de l'échangeur thermique 10. Dans le même temps, le capteur de lait situé dans le collecteur 2 est inactivé.
La pompe de transfert fonctionne pendant un temps prédéterminé, pour le refoulement d'un volume adapté de lait, fonction notamment de celui de l'échangeur 10 associé.
Ce temps de fonctionnement est par exemple obtenu au moyen d'un dispositif de temporisation réglable (par exemple entre 2 et 10 secondes), associé à un contacteur d'activation/inactivation de la pompe 6.

En parallèle de la pompe de transfert 6, le fluide réfrigérant est mis en circulation au sein de l'échangeur 10.
Les moyens pour réaliser cette circulation du fluide réfrigérant sont avantageusement associés également à un dispositif de temporisation réglable (par exemple entre 10 et 60 secondes), en relation avec un contacteur d'activation/inactivation.
Le temps de circulation pour le fluide réfrigérant, déterminant notamment le taux d'échange thermique actif, est avantageusement distinct/indépendant de celui de la pompe de transfert 6. Ce temps d'échange thermique est adapté en fonction des caractéristiques de l'échangeur 10 (notamment de la température et du débit du liquide de refroidissement), et de la température finale du lait à libérer dans la cuve de stockage.

Lorsque la circulation du fluide réfrigérant est arrêtée (c'est-à-dire lorsque la température souhaitée du lait a été obtenue), le capteur de la chambre à lait 2 est réactivé par le nouveau lait provenant de la traite.
Un nouveau cycle de transfert et de pré-refroidissement du lait peut alors être mis en oeuvre.

De manière générale, du fait de son débit élevé, la pompe de transfert 6 fonctionne selon une succession de cycles relativement courts et au final pendant une courte période globale ; par « courte période », on entend un temps significativement inférieur par rapport à la période globale de traite des animaux.
De manière générale, la durée moyenne de la traite est d'environ une heure ; le fonctionnement de la pompe de transfert consiste généralement en 90 à 120 cycles successifs de l'ordre de 3 à 4 secondes chacun, soit 5 à 6 minutes d'activité.

Entre deux cycles de la pompe de transfert 6, la circulation du fluide réfrigérant peut suivre des cycles qui lui sont propres ; en particulier, ce fluide réfrigérant peut continuer de circuler au sein de l'échangeur thermique 10 pour assurer un refroidissement progressif du lait stationnaire.
L'action du fluide réfrigérant est optimisée du fait de son cheminement en sens inverse par rapport à celui du lait, c'est-à-dire depuis le tube périphérique inférieur 12" vers le tube périphérique supérieur 12'.

A chaque nouveau cycle, le lait refroidi au sein de l'échangeur est poussé vers la cuve de stockage 3, et il est remplacé par un volume équivalent de lait « neuf », ce dernier étant destiné à subir à son tour le refroidissement recherché.

Les cycles de la pompe de transfert 6 et les opérations de refroidissement se poursuivent jusqu'à la fin de la traite.
La vidange des canalisations de transfert 5 s'obtient du fait d'un écoulement par simple phénomène de gravité, en particulier suite à l'ouverture - de la prise d'air 8 pour le lait et - d'une vanne trois voies 17a' équipant la voie d'entrée 17a pour le fluide réfrigérant.

Le lait en sortie d'échangeur thermique 10 présente une température optimale, correspondant à celle recherchée par l'opérateur (ou au moins proche de celle-ci).

A titre d'exemple, des essais ont été mis en oeuvre avec un échangeur thermique comportant un tube central 5b présentant une surface intérieure 5b1 et une surface extérieure 5b2 d'un diamètre de 23 mm et 25 mm, respectivement ; et la surface intérieure 121 du tube périphérique 12 a un diamètre de 28 mm. La longueur de l'échangeur est de 48 m.
Les volumes de lait propulsés par chaque cycle de la pompe 6 sont de 10 litres, avec l'envoi d'un nouveau volume toutes les 45 secondes. Le lait présente au départ une température de 35°C dans la chambre à lait ; le fluide réfrigérant est de l'eau à une température d'entrée de 12°C.
En sortie de l'échangeur, la demanderesse a obtenu une température finale de lait de 15°C, pour une température finale d'eau de l'ordre de 25°C ; le ratio correspondant au volume d'eau consommé sur le volume de lait refroidi est de l'ordre de 1,5 (1,5 L d'eau consommé pour refroidir 1 L de lait).

De manière générale, le ratio correspondant au volume d'eau consommé sur le volume de lait refroidi est avantageusement compris entre 1,5 (1,5 L d'eau consommé pour refroidir 1 L de lait) et 1, par exemple de 1,25.

Plus généralement et de préférence, le diamètre de la surface extérieure 5b2 du tube central 5b est compris entre 22 et 34 mm, et le diamètre de la surface intérieure 121 du tube périphérique 12 est compris entre 25 et 38 mm.
Le tube central 5b comporte avantageusement une surface intérieure 5b1 dont le diamètre est de l'ordre de 23 mm et une surface extérieure 5b2 dont le diamètre est de l'ordre de 25 mm.

De plus, le débit du liquide de refroidissement est par exemple de l'ordre de 0,15L/s, soit 9L/min.

Encore d'une manière générale, la consommation réduite en liquide de refroidissement autorise une circulation de ce dernier sur une plus longue période de temps (voir en continu tout au long de la traite), ce qui améliore le rendement de l'installation sur le plan de l'extraction énergétique.

De manière alternative au mode de réalisation représenté sur la figure 1, les deux tubes périphériques 12' et 12" de l'échangeur 10 peuvent être associés chacun à un système de voies entrée/sortie en fluide réfrigérant, pour créer deux circuits en contresens indépendants, propres à chaque tube périphérique 12 (on peut considérer que l'échangeur thermique comporte deux modules qui sont composés chacun d'un tube périphérique 12 avec son tube central associé 5b).

Par ailleurs, l'échangeur thermique 10 peut comprendre plusieurs modules tels que décrits ci-dessus en relation avec les figures 1 à 3, disposés en parallèle et/ou en série afin de s'adapter à différents débits de lait et de fluide réfrigérant, et éviter les pertes de charge.
De plus, la circulation du lait et du fluide réfrigérant peut s'effectuer, toujours à contrecourant, en parallèle et/ou en série au travers de ces différents modules montés en parallèle et/ou en série.

La figure 4 représente ainsi une forme de réalisation dérivant de l'échangeur thermique équipant l'installation de transfert de la figure 1, et qui s'en distingue par la présence de plusieurs modules échangeurs en Vé 11, montés en parallèle.
Les tubes périphériques 12 ne sont pas représentés par souci de simplification.

Ainsi, comme représenté schématiquement sur cette figure 4, on retrouve la canalisation 5 pour la circulation du lait : un tronçon amont 5a et un tronçon terminal 5c, entre lesquels s'étend le tronçon intermédiaire 5b formant partie de l'échangeur thermique 10.

L'échangeur thermique 10 se compose ici de trois modules échangeurs 11, connectés en parallèle aux tronçons amont 5a et aval 5c.

Chaque module 11 est du type de celui décrit dessus en relation avec la figure 1, c'est-à-dire comprenant deux tubes centraux agencés en Vé et associés chacun à un tube périphérique pour la circulation du fluide réfrigérant en sens inverse.

Cette structure d'échangeur thermique 10 est en particulier intéressante pour le traitement de volumes de lait en provenance d'une pompe de transfert à débit important ; cette configuration permet également d'optimiser l'efficacité du refroidissement en répartissant le volume de lait à traiter dans trois modules juxtaposés.

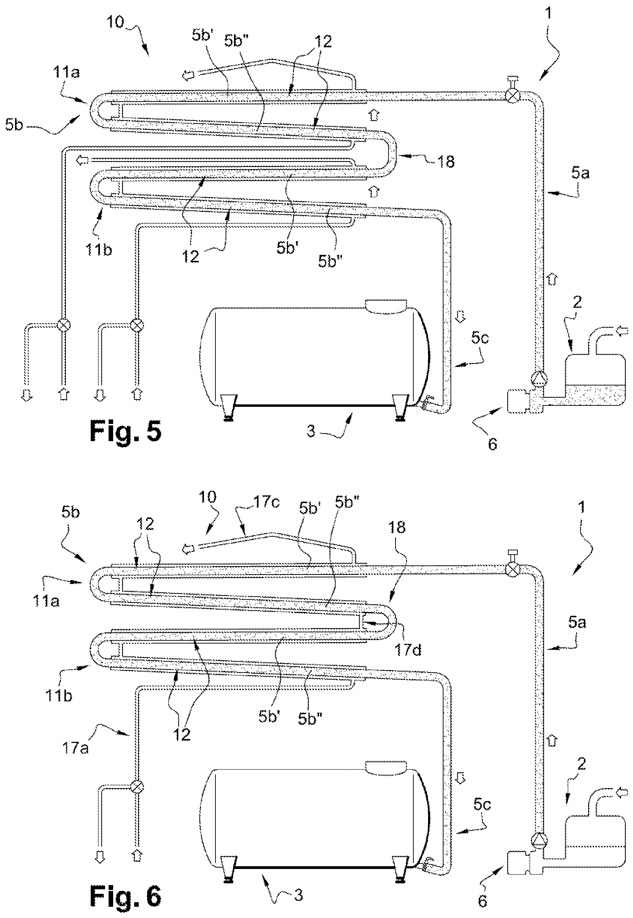

L'installation de transfert représentée sur la figure 5 consiste encore en une variante de celle décrite précédemment en relation avec la figure 1.

Cette installation de transfert se distingue par le fait qu'elle comporte un échangeur thermique 10 muni d'un ensemble de deux modules échangeurs en Vé 11 montés en série, l'un amont 11a et l'autre aval 11b.

Comme décrit précédemment en relation avec la figure 1, chaque module échangeur thermique 11 comprend deux tubes rectilignes 5b' et 5b", agencés selon un Vé ouvert sur le côté, associés chacun à un tube périphérique 12 dans lequel circule le fluide réfrigérant.
L'extrémité aval du second tube rectiligne 5b" du premier module 11a est raccordée, par le biais d'un coude intermédiaire 18, à l'extrémité amont du premier tube rectiligne 5b' du second module 11b.

Ces modules échangeurs thermiques 11 sont associés chacun à leur propre circuit de fluide réfrigérant.

Pour optimiser le bilan énergétique et éviter les chocs thermiques lors du refroidissement, le fluide réfrigérant circulant au sein du module échangeur thermique amont 11a présente alors une température supérieure à celle du fluide réfrigérant circulant au sein du module échangeur aval 11b.

Par exemple, l'eau circulant au sein du module échangeur amont 11a peut être froide (il peut s'agir de l'eau de réseau d'adduction ou d'un puits), c'est-à-dire comprise entre 10 et 15°C ; l'eau circulant dans le module échangeur thermique aval 11b étant quant à elle glacée (provenant par exemple d'une centrale de réfrigération), avec une température comprise entre 1 et 2°C.

La capacité volumique de chaque module échangeur thermique 11 peut ici être égale au volume de lait transféré lors d'au moins un cycle de la pompe de transfert 6. Cette particularité structurelle permet un séjour et un traitement thermique du lait, successivement et pendant un temps identique au sein de chacun des deux modules, avant son transfert jusqu'au tank à lait. La température finale du lait est alors particulièrement proche de celle du lait déjà stocké dans la cuve (à savoir généralement environ 4°C).

De manière générale, encore pour optimiser le rendement ou le bilan énergétique de cette installation de transfert, le fluide réfrigérant au niveau du module échangeur aval 11b peut servir à l'alimentation d'une centrale d'eau glacée utilisée pour la réfrigération du tank à lait et/ou pour l'alimentation en fluide réfrigérant de ce même module aval 11b.

La figure 6 représente, schématiquement, une variante de réalisation de l'installation de transfert décrite en relation avec la figure 5.

Cette installation est similaire à celle décrite précédemment en ce sens qu'elle comprend un échangeur thermique 10 présentant deux modules en Vé 11, montés en série. Mais ici, le circuit en fluide réfrigérant 13 est commun aux deux modules échangeurs thermiques 11a et 11b.

Plus précisément, le fluide réfrigérant entre dans l'échangeur 10 au niveau d'une voie 17a du côté du module aval 11b, circule jusqu'au module amont 11a via une voie de jonction centrale 17d, pour ressortir au niveau de la voie 17c du côté du module amont 11a.

D'une manière générale, l'échangeur thermique 10 des installations de transfert représentées sur les figures 4 et 5, peut être constitué de couples de modules échangeurs 11 qui sont montés en parallèle, tel que décrit précédemment en relation avec la figure 4.

La structure de l'échangeur thermique (nombre de modules montés en série et/ou en parallèle) présente l'intérêt de pouvoir facilement être adaptée notamment en fonction de la structure générale de l'installation laitière, du débit de la pompe de transfert, du volume de lait transféré par chaque cycle de la pompe de transfert et de la température finale recherchée pour le lait.
En général, c'est en particulier le volume de lait transféré par chaque cycle de la pompe de transfert (habituellement entre 5 L et 25 L), qui permet de calculer l'assemblage des modules composant l'échangeur thermique.

De même, pour assurer l'efficacité de l'installation, la section globale des canalisations à lait 5b de l'échangeur thermique 10, est au moins égale à la section de la canalisation de refoulement de la pompe de transfert. Cela permet à la pompe de transfert 6 de fonctionner de manière optimale sans appliquer de pression excessive sur le lait transféré. Cela permet également de limiter les pertes de charges et de conserver le débit de la pompe de transfert lors des phases de lavage de l'installation.

De plus, les tubes de l'installation de transfert sont avantageusement orientés et agencés de sorte que les liquides puissent s'écouler naturellement, par simple phénomène de gravité, en fin de récolte du lait mais aussi lors des opérations de nettoyage.

Les tubes périphériques de l'échangeur peuvent être associés à un système de voies entrée/sortie multiples en fluide réfrigérant, pour créer un circuit en contresens propre à chaque tube périphérique voire plusieurs circuits distincts sur la longueur d'un même tube.
Dans tous les cas, le circuit du fluide de refroidissement dans l'échangeur thermique est adapté pour optimiser le refroidissement progressif du lait.

La figure 7 illustre un module « spiralé » 11 d'un échangeur thermique 10.

Ce module « spiralé » 11 est constitué d'un tube central 5b de forme générale spiralée pour la circulation du lait, logé de manière concentrique au sein d'un tube périphérique 12 également de forme spiralée, pour le cheminement du fluide réfrigérant. La section de ces tubes 5b, 12 est ainsi identique à celle représentée sur la figure 3.

Les différentes caractéristiques développées ci-dessus en relation avec les figures 1 à 6, notamment les caractéristiques dimensionnelles, s'appliquent le cas échéant dans ce mode de réalisation spiralé.

De même, les tubes 5b, 12 sont maintenus concentriques au moyen de bossages rentrants ménagés sur le tube périphérique 12 (en direction du tube central 5b). Ces bossages 16 sont avantageusement répartis par groupes de quatre, lesdits groupes étant régulièrement espacés les uns par rapport aux autres.

Un tel module de type spiralé à l'avantage d'être particulièrement compact.

En pratique, les structures d'installation de transfert selon l'invention assurent une extraction efficace des calories contenues dans le lait transféré, cela même dans le cas de réseau d'eau peu performant et avec une consommation réduite en eau.

## Revendications

1. Installation de transfert de lait depuis une machine à traire jusqu'à une cuve de stockage, laquelle installation comprend un réservoir de récolte du lait (2) raccordé à ladite cuve de stockage (3) par un système de canalisation (5), lequel réservoir de récolte (2) est équipé d'une pompe (6) pour assurer le transfert du lait, par cycles successifs et espacés, par l'intermédiaire dudit système de canalisation (5) depuis ledit réservoir de récolte (2) jusqu'à ladite cuve de stockage (3), lequel système de canalisation (5) est équipé d'au moins un échangeur thermique tubulaire (10) pour assurer le refroidissement ou au moins le pré-refroidissement du lait, lequel échangeur thermique (10) comprend au moins un module (11) comportant un tube central (5b) qui est logé de manière concentrique au sein d'un tube périphérique (12), lequel tube central (5b) et lequel tube périphérique (12) sont chacun délimités par une surface annulaire intérieure (5b1, 121) et par une surface annulaire extérieure (5b2, 122), laquelle surface intérieure (5b1) du tube central (5b) définit un espace central (14) pour la circulation du lait, constitutif dudit système de canalisation (5), et laquelle surface extérieure (5b2) du tube central (5b) et laquelle surface intérieure (121) du tube périphérique (12) définissent ensemble un espace annulaire (15) pour le cheminement d'une lame de fluide réfrigérant, destiné à cheminer à contrecourant par rapport au sens de cheminement du lait,
l'épaisseur radiale (e) dudit espace annulaire (15) est inférieure ou égale à 2,8 mm, et le ratio correspondant à la capacité volumique dudit espace annulaire (15) sur la capacité volumique dudit espace central (14) est inférieur ou égal à une valeur de 0,45, **caractérisée en ce que** le lait demeure statique au sein dudit échangeur thermique (10) entre deux desdits cycles de transfert.

2. Installation selon la revendication 1, **caractérisée en ce que** l'épaisseur radiale e de l'espace annulaire réfrigérant (15) est comprise entre 1 mm et 2,3 mm.

3. Installation selon l'une quelconque des revendications 1 ou 2, **caractérisée en ce que** le fluide réfrigérant chemine au sein de l'espace annulaire dédié (15), de sorte à assurer un régime turbulent dudit fluide réfrigérant.

4. Installation selon l'une quelconque des revendications 1 à 3, **caractérisée en ce que** le ratio correspondant à la capacité volumique de l'espace annulaire (15) sur la capacité volumique de l'espace central (14) est compris entre 0,3 et 0,4.

5. Installation selon l'une quelconque des revendications 1 à 4, **caractérisée en ce que** le diamètre de la surface extérieure (5b2) du tube central (5b) est compris entre 22 et 34 mm, et **en ce que** le diamètre de la surface intérieure (121) du tube périphérique (12) est compris entre 25 et 38 mm.

6. Installation selon la revendication 5, **caractérisée en ce que** le diamètre de la surface extérieure (5b2) du tube central (5b) est de l'ordre de 25 mm, et **en ce que** le diamètre de la surface intérieure (121) du tube périphérique (12) est de l'ordre de 28 mm.

7. Installation selon l'une quelconque des revendications 1 à 6, **caractérisée en ce que** le tube périphérique (12) est muni de bossages (16) saillants du côté de sa surface intérieure (121) et orientés vers le tube central associé (5b), de sorte à assurer le centrage de ce dernier et favoriser le régime turbulent du fluide réfrigérant.

8. Installation selon l'une quelconque des revendications 1 à 7, **caractérisée en ce que** l'échangeur thermique (10) comprend au moins un module (11) constitué d'au moins un tube central rectiligne (5b) pour la circulation du lait, logé de manière concentrique au sein d'un tube périphérique (12) également rectiligne, pour le cheminement du fluide réfrigérant.

9. Installation selon la revendication 8, **caractérisée en ce que** le module (11) ou l'un au moins des modules (11) est constitué de deux tubes centraux rectilignes (5b', 5b") logés chacun dans un tube périphérique rectiligne (12) et reliés par un coude de jonction (5b'''), lesquels tubes centraux (5b', 5b") sont inclinés vers le bas, de l'amont vers l'aval, formant ainsi un V ouvert sur le côté.

10. Installation selon l'une quelconque des revendications 1 à 7, **caractérisée en ce que** l'échangeur thermique (10) comprend au moins un module constitué d'au moins un tube central de forme générale spiralée pour la circulation du lait, logé de manière concentrique au sein d'un tube périphérique également de forme spiralée, pour le cheminement du fluide réfrigérant.

11. Installation selon l'une quelconque des revendications 1 à 10, **caractérisée en ce que** l'échangeur thermique (10) comprend plusieurs modules (11) disposés en parallèle et/ou en série.

## Patentansprüche

1. Anlage für den Transport von Milch von einer Melkmaschine zu einem Lagerbehälter, wobei die Anlage einen Tank (2) zum Sammeln der Milch aufweist, der mit dem Lagerbehälter (3) über ein Leitungssystem (5) verbunden ist, wobei der Sammeltank (2) mit einer Pumpe (6) ausgestattet ist, um den Transport der Milch in aufeinanderfolgenden und voneinander beabstandeten Zyklen mittels des Leitungssystems (5) vom Sammeltank (2) zum Lagerbehälter (3) sicherzustellen, wobei das Leitungssystem (5) mit wenigstens einem rohrförmigen Wärmetauscher (10) ausgestattet ist, um das Kühlen oder mindestens das Vorkühlen der Milch sicherzustellen, wobei der Wärmetauscher (10) wenigstens ein Modul (11) mit einem zentralen Rohr (5b), das konzentrisch innerhalb eines umlaufenden Rohrs (12) angeordnet ist, aufweist, wobei das zentrale Rohr (5b) und das umlaufende Rohr (12) jeweils durch eine innere ringförmige Oberfläche (5b1, 121) und eine äußere ringförmige Oberfläche (5b2, 122) begrenzt sind, wobei die innere Oberfläche (5b1) des zentralen Rohrs (5b) einen zentralen Raum (14) für die Durchleitung der Milch bestimmt, der das Leitungssystem (5) bildet, und wobei die äußere Oberfläche (5b2) des zentralen Rohrs (5b) und die innere Oberfläche (121) des umlaufenden Rohrs (12) gemeinsam einen ringförmigen Raum (15) zum Durchleiten einer Kühlflüssigkeitslamelle begrenzen, der dazu bestimmt ist, das Durchleiten in Bezug auf die Flußrichtung der Milch im Gegenstrom auszuführen, wobei die radiale Dicke (e) des ringförmigen Raums (15) kleiner als oder gleich 2,8 mm ist und das Verhältnis zwischen dem Aufnahmevolumen des ringförmigen Raums (15) und dem Aufnahmevolumen des zentralen Raums (14) kleiner als oder gleich einem Wert von 0,45 ist, **dadurch gekennzeichnet, daß** die Milch im Wärmetauscher (10) zwischen zwei Transportzyklen statisch bleibt.

2. Anlage gemäß Anspruch 1, **dadurch gekennzeichnet, daß** die radiale Dicke (e) des ringförmigen Raums (15) zwischen 1 mm und 2,3 mm beträgt.

3. Anlage gemäß einem der Ansprüche 1 oder 2, **dadurch gekennzeichnet, daß** die Kühlflüssigkeit im Inneren des dafür vorgesehenen ringförmigen Raums (15) fließt, um eine turbulente Strömung der Kühlflüssigkeit sicherzustellen.

4. Anlage gemäß einem der Ansprüche 1 bis 3, **dadurch gekennzeichnet, daß** das Verhältnis zwischen dem Aufnahmevolumen des ringförmigen Raums (15) und dem Aufnahmevolumen des zentralen Raums (14) zwischen 0,3 und 0,4 beträgt.

5. Anlage gemäß einem der Ansprüche 1 bis 4, **dadurch gekennzeichnet, daß** der Durchmesser der äußeren Oberfläche (5b2) des zentralen Rohrs (5b) zwischen 22 und 34 mm beträgt und daß der Durchmesser der inneren Oberfläche (121) des umlaufenden Rohrs (12) zwischen 25 und 38 mm beträgt.

6. Anlage gemäß Anspruch 5, **dadurch gekennzeichnet, daß** der Durchmesser der äußeren Oberfläche (5b2) des zentralen Rohrs (5b) etwa 25 mm beträgt und daß der Durchmesser der inneren Oberfläche (121) des umlaufenden Rohrs (12) etwa 28 mm beträgt.

7. Anlage gemäß einem der Ansprüche 1 bis 6, **dadurch gekennzeichnet, daß** das umlaufenden Rohr (12) auf seiner inneren Oberfläche (121) mit zum zugehörigen zentralen Rohr (5b) gerichteten Ausbeulungen (16) versehen ist, um eine Zentrierung des letzteren sicherzustellen und die turbulente Strömung der Kühlflüssigkeit zu fördern.

8. Anlage gemäß einem der Ansprüche 1 bis 7, **dadurch gekennzeichnet, daß** der Wärmetauscher (10) wenigstens ein Modul (11) aufweist, das aus wenigstens einem geradlinigen zentralen Rohr (5b) für den Transport der Milch gebildet ist, das konzentrisch im Inneren eines ebenfalls geradlinigen umlaufenden Rohrs (12) für die Durchleitung der Kühlflüssigkeit angeordnet ist.

9. Anlage gemäß Anspruch 8, **dadurch gekennzeichnet, daß** das Modul (11) oder wenigstens eins der Module (11) aus zwei geradlinigen zentralen Rohren (5b', 5b") gebildet ist, die jeweils in einem geradlinigen umlaufenden Rohr (12) angeordnet und durch ein Verbindungsrohr (5b"') verbunden sind, wobei die zentralen Rohre (5b', 5b") von stromaufwärts nach stromabwärts nach unten geneigt sind und so ein zur Seite hin offenes V bilden.

10. Anlage gemäß einem der Ansprüche 1 bis 7, **dadurch gekennzeichnet, daß** der Wärmetauscher (10) wenigstens ein Modul (11) aufweist, das aus wenigstens einem zentralen Rohr mit einer allgemeinen spiralartigen Form für den Transport der Milch gebildet ist, das konzentrisch im Inneren eines ebenfalls spiralförmigen umlaufenden Rohrs für die Durchleitung der Kühlflüssigkeit angeordnet ist.

11. Anlage gemäß einem der Ansprüche 1 bis 10, **dadurch gekennzeichnet, daß** der Wärmetauscher (10) mehrere parallel und/oder in Reihe angeordnete Module (11) aufweist.

## Claims

1. A facility for transferring milk from a milking machine to a storage vat, said facility comprising a milk collection tank (2) connected to said storage vat (3) through a pipe system (5), said collection tank (2) being equipped with a pump (6) for transferring the milk, by successive and temporally spaced-out cycles, through said pipe system (5), from said collection tank (2) to said storage vat (3), said pipe system (5) being equipped with at least one tubular heat exchanger (10) for cooling or at least pre-cooling the milk, said heat exchanger (10) comprising at least one module (11) including a central tube (5b) that is concentrically housed within a peripheral tube (12), said central tube (5b) and said peripheral tube (12) each being delimited by an inner annular surface (5b1, 121) and by an outer annular surface (5b2, 122), said inner surface (5b1) of the central tube (5b) defining a central space (14) for the flowing of the milk, making part of said pipe system (5), and said outer surface (5b2) of the central tube (5b) and said inner surface (121) of the peripheral tube (12) defining together an annular space (15) for the flowing of a blade of cooling fluid, intended to flow in the opposite direction with respect to the milk flow direction, the radial thickness (e) of said annular space (15) being lower than or equal to 2.8 mm, and the ratio corresponding to the volume capacity of said annular space (15) to the volume capacity of said central space (14) being lower than or equal to a value of 0.45, **characterized in that** the milk remains static within said heat exchanger (10) between two of said transfer cycles.

2. The facility according to claim 1, **characterized in that** the radial thickness e of the cooling annular space (15) is comprised between 1 mm and 2.3 mm.

3. The facility according to any one of claims 1 or 2, **characterized in that** the cooling fluid flows within the dedicated annular space (15), so as to provide said cooling fluid with a turbulent regime.

4. The facility according to any one of claims 1 to 3, **characterized in that** the ratio corresponding to the volume capacity of the annular space (15) to the volume capacity of the central space (14) is comprised between 0.3 and 0.4.

5. The facility according to any one of claims 1 to 4, **characterized in that** the diameter of the outer surface (5b2) of the central tube (5b) is comprised between 22 and 34 mm, and **in that** the diameter of the inner surface (121) of the peripheral tube (12) is comprised between 25 and 38 mm.

6. The facility according to claim 5, **characterized in that** the diameter of the outer surface (5b2) of the central tube (5b) is of the order of 25 mm, and **in that** the diameter of the inner surface (121) of the peripheral tube (12) is of the order of 28 mm.

7. The facility according to any one of claims 1 to 6, **characterized in that** the peripheral tube (12) is provided with bosses (16) protruding on the side of its inner surface (121) and directed toward the associated central tube (5b), for centering the later and favouring the turbulent regime of the cooling fluid.

8. The facility according to any one of claims 1 to 7, **characterized in that** the heat exchanger (10) comprises at least one module (11) consisted of at least one rectilinear central tube (5b) for the flowing of the milk, concentrically housed within a peripheral tube (12), also rectilinear, for the flowing of the cooling fluid.

9. The facility according to claim 8, **characterized in that** the module (11) or one at least of the modules (11) is consisted of two rectilinear central tubes (5b', 5b") each housed within a rectilinear peripheral tube (12) and connected by a union elbow (5b'''), said central tubes (5b', 5b") being inclined downward, from upstream to downstream, hence forming a side-open V.

10. The facility according to any one of claims 1 to 7, **characterized in that** the heat exchanger (10) comprises at least one module (11) consisted of at least one generally spiral-shaped central tube for the flowing of the milk, concentrically housed within an also spiral-shaped peripheral tube for the flowing of the cooling fluid.

11. The facility according to any one of claims 1 to 10, **characterized in that** the heat exchanger (10) comprises several modules (11) arranged in parallel and/or in series.
